(19) Europäisches Patentamt / European Patent Office / Office européen des brevets

(11) **EP 4 390 788 A1**

(12) **EUROPEAN PATENT APPLICATION**

(43) Date of publication:
**26.06.2024 Bulletin 2024/26**

(21) Application number: **22383261.9**

(22) Date of filing: **22.12.2022**

(51) International Patent Classification (IPC):
**G06Q 10/04** (2023.01)    **G06Q 10/0832** (2023.01)
**G06Q 50/06** (2024.01)    **G06Q 50/28** (2012.01)

(52) Cooperative Patent Classification (CPC):
**G06Q 10/0832; G06Q 10/04; G06Q 10/08;
G06Q 50/06**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **Seydenschwanz, Martin
  81541 München (DE)**
• **Majewski, Kurt
  81541 München (DE)**
• **Pastor Prado, José
  80937 München (DE)**
• **Romero Velazquez, Manuel
  41200 Alcala Del Río / Sevilla. (ES)**

(74) Representative: **Siemens Patent Attorneys
Postfach 22 16 34
80506 München (DE)**

(54) **COMPUTER-IMPLEMENTED METHOD AND SYSTEM FOR OPTIMIZING ENERGY AND PEAK POWER CONSUMPTION OF A REEFER CONTAINER SYSTEM COMPRISING A PLURALITY OF REEFER CONTAINERS**

(57) The present invention claims a computer-implemented method for optimizing energy and peak power consumption of a reefer container system comprising a plurality of reefer containers (R1,..., Rx) and comprising a directly coupled or remote server computer (DEOP) in communication with each reefer container, whereby each reefer container comprises a refrigeration system which is coupled with at least one sensor suitable for measuring the internal temperature of an interior product compartment of the reefer container and configured to control the internal temperature within a pre-determined temperature range dependent on at least one product loaded in the interior product compartment, the method comprising the following steps:

a) recording, by measuring at the at least one sensor, the internal temperature over a pre-defined time horizon, which is divided into several time intervals, whereby some of the time intervals frame one or more peak power intervals,

b) receiving ambient temperature measured outside the reefer containers in each time interval over the time horizon,

c) obtaining energy consumption of each reefer container in each such time interval,

d) obtaining power peak consumption of all reefer containers in each peak power interval,

e) providing a model which represents reefer temperature dynamics by using the recorded internal temperatures measured in each such time interval and the ambient temperatures in each such time interval,

f) optimizing the energy and peak power consumption by using the provided temperature dynamics starting from a beginning time interval over a pre-definable amount of subsequent time intervals with the objective to keep the internal temperature of each reefer container in the corresponding pre-determined temperature range,

g) operating all of the reefer containers within the corresponding pre-determined temperature ranges whereby each container operates with the parameters of optimized the power and peak power consumption.

FIG 1

EP 4 390 788 A1

**Description**

*Independent of the grammatical term usage, individuals with male, female or other gender identities are included within the term.*

The present invention relates to a computer-implemented method and to a system for optimizing energy and peak power consumption of a reefer container system comprising a plurality of reefer containers and comprising a directly coupled or remote server computer in communication direct or maybe via a reefer management system with each reefer container, whereby each reefer container comprises a refrigeration system which is coupled with at least one sensor suitable for measuring the internal temperature of an interior product (cargo) compartment of the reefer container and configured to control the internal temperature within a pre-determined temperature range dependent on at least one product loaded in the interior product compartment.

BACKGROUND OF THE INVENTION

Refrigerating containers (Reefer container or abbreviated reefer) are used to transport goods all around the world via big container transporters. When reefers are stored temporarily or for long time on storage places e.g. in harbors, at container terminals e.g. of stations or larger rooms for food and/or beverage product. After they storage reefer containers may be ready for transfer after loading / before unloading). They usually get connected to an energy management system to maintain cooling function.

A refrigeration system of a reefer container is configured to control a climate of an interior cargo compartment of the reefer container. The refrigeration system can comprise a refrigeration circuit, including at least a compressor configured to compress a refrigerant, a cooling space, and sensors.

The goods/products in the interior cargo compartment need to be kept on certain temperature levels. For instance, the following categorization based on cooling requirements can be found in the table:

| Product | Temperature range (°C) | Temperature Fluctuation Sensitivity (°C) |
|---|---|---|
| Deep-Frozen: Seafood, Ice-cream | - 30 to - 28 | Low ($\pm 2$) |
| Frozen: Frozen fish, meat | - 20 to - 16 | Low ($\pm 2$) |
| Chilled: Fruits and Vegetables | - 5 to 5 | High ($\pm 0.5$) |
| Pharmaceuticals | 2 to 8 | High |
| Bananas | 12 - 14 | Very High ($\pm 0.2$) |
| Musical instruments, paintings | 18 - 21 | Low |

Maintaining the product temperature within the required temperature bands is crucial to avoid any product harm (e.g., food losses) and associated compensation payments from the container storage operator to the container owners.

For operating refrigeration systems of the reefer containers, the operators use energy from the local grid. With this usage, costs are associated:

- Expenses of energy (typically PPAs - Power Purchase Agreements, i.e.: predefined prices for usage of energy or Time of Use (ToU) - Tariffs, which means time-varying prices).
- Expenses for peak power usage (also called "Demand Charges"). Based on the maximum power import of the storage place from the grid within certain time frame, the operator gets extra fees. Here, lots of different pricing models exists all over the world. It could be in repetitive time intervals e.g. daily, weekly, monthly, or yearly peaks, but also more complicated splits of multiple time-ranges (day/night, labor hours, etc.)

Expenses of energy or of peak power technically come along with power grid load at certain points of time or time periods.

In US 11,079,173 B2 a control system is disclosed which automates control of reefer container resources in a reefer container system including a remote server computer in communication with reefer containers. Each reefer container includes a refrigeration system to control a climate of an interior cargo compartment of the reefer container. The refrigeration system transmits refrigeration system parameter data; the remote server computer obtains the parameter data acquired during operation of the refrigeration system from at least one reefer container, and estimates a condition of the refrigeration system, including determining whether an alarm has been issued, or whether the estimated reefer container condition indicates that the refrigeration system requires maintenance or testing. A reefer container resource control unit receives the reefer container condition to automatically allocate the reefer container based on the reefer container condition. The drawback of this approach is that each reefer container follows its own control logic to keep the inside temperature within the admissible range for the cargo. Usually, these control strategies are not optimized for energy efficiency.

In view of this, it is an objective of the present invention to simultaneously reduce the energy and peak power consumption of a set of reefer containers in/at a storage place. Thereby, energy expenses for the operator can be reduced and overall grid stability and sustainability can be increased.

SUMMARY OF THE INVENTION

The above-mentioned object is achieved by a method and one or more apparatus and/or a system and/or a device according to the features of the independent claims.

Preferred embodiments of the invention are described in the dependent claims. Any combination of the features of the dependent claims to each other and with the features of the independent claims is possible.

The invention claims a computer-implemented method for optimizing energy and peak power consumption of a reefer container system comprising a plurality of reefer containers and comprising a directly coupled or remote server computer in communication (direct or maybe via a reefer management system) with each reefer container, whereby each reefer container comprises a refrigeration system which is coupled with at least one sensor suitable for measuring the internal temperature of an interior product (cargo) compartment of the reefer container and configured to control the internal temperature within a pre-determined temperature range dependent on at least one product loaded in the interior product compartment, the method comprising the following steps:

- a) recording, by measuring at the at least one sensor, the internal temperature over a pre-defined time horizon, which is divided into several time intervals, whereby some of the time intervals frame one or more peak power intervals,
- b) receiving ambient temperature measured outside the reefer containers in each time interval over the time horizon,
- c) obtaining energy consumption of each reefer container in each such time interval,
- d) obtaining or determining power peak consumption of all reefer containers in each peak power interval,
- e) providing a model (by the server computer) which represents reefer temperature dynamics by using the recorded internal temperatures measured in each such time interval and the ambient temperatures in each such time interval,
- f) optimizing (by the server computer) the energy and peak power consumption by using the provided temperature dynamics starting from a beginning time interval over a pre-definable amount of subsequent time intervals with the objective to keep the internal temperature of each reefer container in the corresponding pre-determined temperature range,
- g) operating (by reefer container system) all of the reefer containers within the corresponding pre-determined temperature ranges whereby each container operates with the parameters of the optimized power and peak power consumption.

At least one setpoint for the reefer internal temperature can be configured, whereby such setpoint can be set by default value or be derived from the provided model and is input into said optimizing according to step f) and used during operating according to step g).

Thermal parameters can be labelled with heat exchange coefficient of each reefer container and cooling efficiency of each reefer container and can be used in the model of the temperature dynamics. The thermal parameters can be approximated by regression techniques (e.g. Linear or Least squared or polynomial) or machine learned data clustering techniques. The model is enhanced or is trained by said parameters and/or setpoints during operation of the reefer containers.

The temperature dynamics can be derived from Newtons's Law of cooling. Temperature dynamics can be modelled as such that energy and peak power consumption are weighted.

The method steps acccording to the invention and their embodiments can be repeated preferably triggered by at least one pre-defined event. Such an event can be timed on a fixed timepoint and date. An event can also be conditional, e.g. if the external or internal temperature exceed a defined threshold.

The optimizing step of the invention can use Mixed-Integer Linear Programming with the objective function to minimize the energy and peak power consumption while keeping the internal temperature of each reefer container in the corresponding pre-determined temperature range.

Properties like size, surface area, termal insulation of each reefer container and mass of the product as well as external factors like solar exposure, surroundings to reflect or absorb heat can be incorporated into the model of the temperature dynamics.

The benefits of the invention are:

- The temperature dynamics are simplified. Dynamic approximations are sufficient for the underlying control task to reduce overall energy consumption and peak power of all the reefers at/in the storage place.
- The system can continuously collect relevant measurement data and regularly update the parameter estimations based on the measured data.
- This allows continuous improvement of the model and introduction in the optimization process resulting an improved quality. Such improvement can be brought about machine learning techniques.
- With the inventive optimization approach, complicated demand charge / peak power tariffs can be modeled and efficiently integrated into the optimization of overall reefer control at/in storage place.
- When the invention is used in a rolling horizon model-predictive control fashion (repeated optimization calls with rolling time horizon), the proposed algorithm is very robust in handling system changes (ambient/ surrounding conditions, arriving / departing reefers, etc.)

The invention further claims a system for optimizing energy and peak power consumption of a reefer container system comprising a plurality of reefer containers, whereby the system is directly and/ or remotely coupled with a server computer being in communication (direct or maybe via a reefer management system) with each reefer container, whereby each reefer container comprises a refrigeration system which is coupled with at least one sensor suitable for measuring the internal temperature of an interior product compartment of the reefer container and configured to control the internal temperature within a pre-determined temperature range dependent on at least one product loaded in the interior product compartment, comprising at least one processor or processing logic which is configured to:

- a) recording, by measuring at the at least one sensor, the internal temperature over a pre-defined time horizon, which is divided into several time intervals, whereby some of the time intervals frame one or more peak power intervals,
- b) receiving ambient temperature measured outside (by a monitoring device) the reefer containers in each time interval over the time horizon,
- c) obtaining energy consumption of each reefer container in each such time interval,
- d) obtaining or determining power peak consumption of all reefer containers in each peak power interval,
- e) providing (by the server computer) a model which represents reefer temperature dynamics by using the recorded internal temperatures measured in each such time interval and the ambient temperatures in each such time interval,
- f) optimizing (by the server computer) the energy and peak power consumption by using the provided temperature dynamics starting from a beginning time interval over a pre-definable amount of subsequent time intervals with the objective to keep the internal temperature of each reefer container in the corresponding pre-determined temperature range,
- g) operating (by the reefer container system) all of the reefer containers within the corresponding pre-determined temperature ranges whereby each container operates with the parameters of the optimized power and peak power consumption.

The one or more processors can be distributed organized on servers or in a cloud. Embodiments as described above for the method can be analogous applied for the system and for computer program (product) and for the computer-readable storage medium.

This system and the device can be implemented by hardware, firmware and/or software or a combination of them.

The computer-readable storage medium stores instructions executable by one or more processors of a computer, wherein execution of the instructions causes the system to perform the method.

The computer program (product) is executed by one or more processors of a computer/system and performs the method.

BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. In the figures, identical or functionally identical elements are denoted by identical reference signs. Included in the drawings are the following figures:

figure 1 illustrates an overview of the a reefer container control architecture,
figure 2 illustrates local control of each reefer container (On/Off cyling),
figure 3 shows an example for measured data, in particular the ambient and internal temperature,
figure 4 shows an example of resulting temperature dynamics from a pre-qualification routine,

figure 5 a flow chart of the pre-qualification routine and the optimization and operation step according to the invention, and

figure 6 depicts energy savings and peak power reduction in an example scenario reached by the optimization.

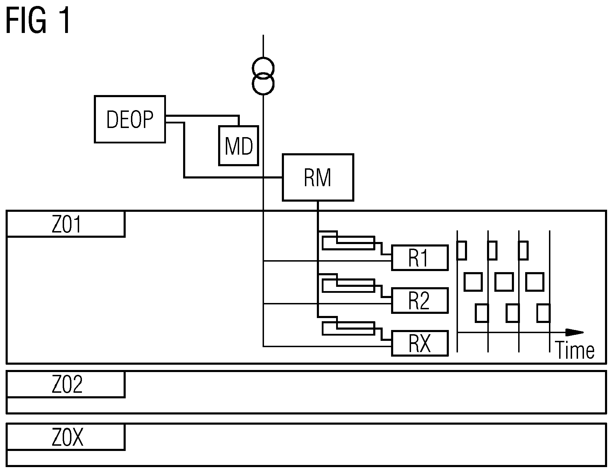

Figure 1 illustrates an overview of the a reefer container control architecture. There is a distributed energy optimization system DEOP, server computer, which is directly or remotely coupled via a reefer management system RM to each of a plurality of reefer containers R1, ..., RX. The server computer can be linked to a monitoring device MD which can measure data e.g. with sensor. Such data can be ambient temparature, huminity, direct solar exposure, surrounding, etc. The reefer management system and the reefer containers build a reefer container system which is divided into several reefer zones Z01, ... Z0X (e.g. 24 reefer zones). For instance, a zone comprises 35 reefer containers. The timeline on the right-hand side of R1 to RX depicts an internal temperature measuring process over a predefined time horizon.

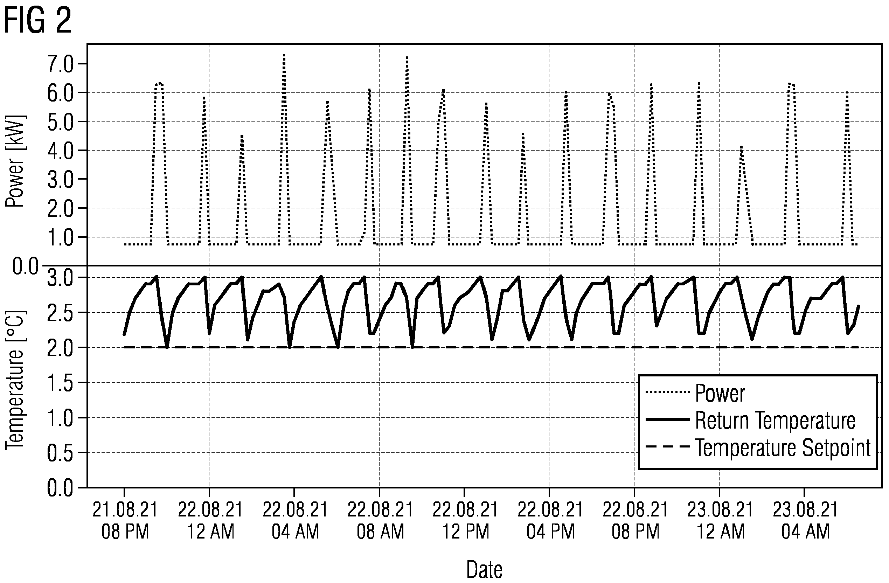

Figure 2 illustrates local control of each reefer container (On/Off cyling). On the x-axis there is a timeline. In this example there are a repetitive time points/intervals every day.

On the y-axis there is above the power in kW and below the temperature degree (Celsius). Dotted line/curve represents the power data and the solid line/curve represents the return temperature. The dash line represents a temperature setpoint.

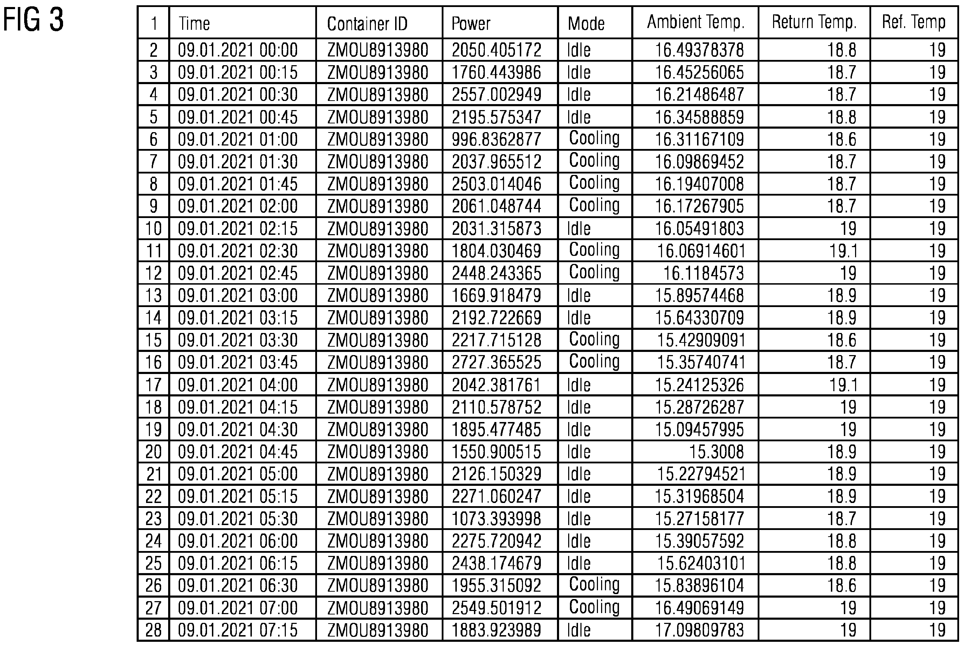

Figure 3 shows an example for measured data, in particular the ambient, internal reefer and return temperature.

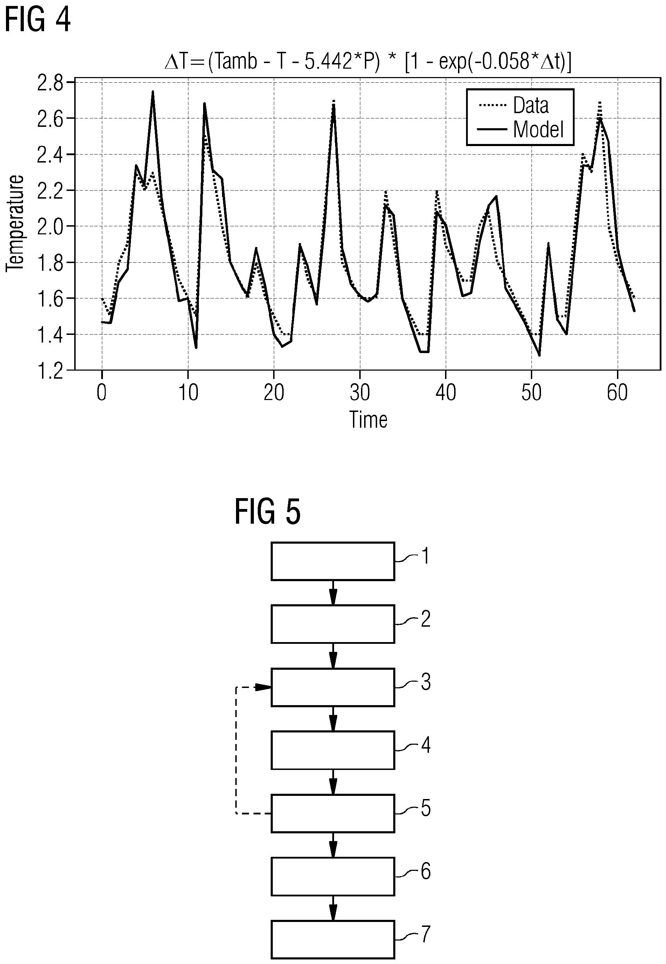

Figure 4 shows an example of resulting temperature dynamics from a pre-qualification routine. X-axis there is marked with timeline. Precisely, that means time indices e.g. with an interval length of 15 minutes. So 60 multiplied with 15 min result in a time horizon of 15 hours. On the y-axis there is the temperature. Dotted line/curve represents the measured real data and the solid line/curve represents the modelled data according to the formula shown upside the depicted graph.

For solving the technical problem of reducing energy and peak power consumption for reefers in/at storage places, Mixed-Integer Linear Programming (MILP) is used to jointly control the cooling of the reefer set. The resulting control logic will give instructions to the reefer management systems of the container terminal that forwards the control signals to the single reefer containers.

An integer programming problem is a mathematical optimization or feasibility program in which some or all of the variables are restricted to be integers. Since integer linear programming is NP-hard, many problem instances are intractable and so heuristic methods must be used instead. A disadvantage of heuristic methods is that if they fail to find a solution, it cannot be determined whether it is because there is no feasible solution or whether the algorithm simply was unable to find one. Further, it is usually impossible to quantify how close to optimal a solution returned by these methods are. In many settings the term refers to integer linear programming (ILP), in which the objective function and the constraints (other than the integer constraints) are linear. If some decision variables are not discrete, the problem is known as a Mixed-Integer Programming problem. (https://en.wikipedia.org/wiki/Integer_programming). Typically, commercial, and non-commercial solvers are used to solve a provided model representing a Mixed-Integer Linear Programming problem. Such solvers are, for instance, Gurobi, SCIP, CPLEX, Xpress and others.

The flexible forecast horizon $[0,T]$ (typically one day to one week) is divided in single time steps $t_n$ with $n \in \{1...N\}$, $t_0 = 0$ and $t_N = T$. Moreover the set of reefers $r \in \{1...R\}$ and the peak power intervals $i \in \{1...I\}$ is definable/defined. Each peak power interval $i$ is mapped to a specific time frame (e.g. each day, week, month, year, or more complicated combinations). Within this time frame, the overall peak power consumption of all reefers will be tracked. Naturally, within the forecast horizon $[0,T]$ multiple peak power intervals are included and the set of time steps $t_n$ will be divided up to the peak power intervals. Peak power intervals may also overlap (e.g., multple billing for daily and monthly peaks).

Parameters:

| | |
|---|---|
| $t_{n-1}$: | Start of time interval $n$ in $[h]$ |
| $\Delta t_n$: | Length of time interval $n$ in $[h]$ |
| $c(t_n)$: | Costs of energy in time interval $n$ in in $[\text{€}/kWh]$ |
| $\hat{c}_i$: | Costs of peak power in peak interval $i$ in $[\text{€}/kWp]$ |
| $\alpha_r$: | Heat exchange coefficient of reefer $r$ in $[1/h]$ |
| $\beta_r$: | Cooling efficiency coefficient of reefer $r$ in $[\text{°C}/kWh]$ |
| $P_{r,0}$: | Idling power (auxiliary power consumption) of reefer $r$ in $[kW]$ |

(continued)

| $T_{amb}(t_n)$: | Ambient temperature (forecast) in time interval $n$ in [°C] |
| --- | --- |

Variables:

| $P_r(t_n)$: | Energy consumption of reefer $r$ in time interval $n$ in [$kW$] |
| --- | --- |
| $T_r(t_n)$: | Internal temperature of reefer $r$ in time interval $n$ in [$kW$] |
| $\hat{P}_i$: | Peak power consumption of all reefers in peak interval $i$ in [$kW$] |

With the help of these parameters and variables. Mixed-Integer Linear Program ($P$) is used to model the system dynamics and minimize the energy consumption and power peaks while operating all reefers within there allowed temperature bands:

$$(1) \quad \min\left[\sum_{n=1}^{N}\sum_{r=1}^{R} P_r(t_n) * c(t_n)\right] + \sum_{i=1}^{I} \hat{P}_i * \hat{c}_i \quad \text{(Objective)}$$

$$(2) \quad \hat{P}_i \geq \sum_{r=1}^{R} P_r(t_n) \quad \forall t_n \in I_i \text{ (Peak power of Reefer r in Interval i)}$$

$$(3) \quad T_r(t_{n+1}) = T_r(t_n) + \left(T_{amb}(t_n) - T_r(t_n) - \frac{\beta_r}{\alpha_r}\left(P_r(t_n) - P_{r,0}\right)\right) * \left(1 - exp(-\alpha_r * \Delta t_n)\right) \quad (P)$$

(Reefer Temperature Dynamics)

(4a) $T_r(t_n) \geq T_{r,min}$ (Lower Bound Reefer Temperature)
(4b) $T_r(t_n) \leq T_{r,max}$ (Upper Bound Reefer Temperature)
(5a) $P_r(t_n) \geq P_{r,min}$ (Lower Bound Reefer Energy consumption)
(5b) $P_r(t_n) \leq P_{r,max}$ (Upper Bound Reefer Energy consumption)

The energy consumption of each reefer container shall be kept within a range defined by pre-determined lower and upper bound (see equation 5a and 5b).

Under costs of energy consumption and/or costs of peak power consumption can be mathematically understood, that higher energy consumption and/or higher peak power consumption will be more "punished". So costs can express a kind of weighting. Costs of peak power consumption are usually higher than costs of energy consumption due to higher load in the grid than in the normal grid operation. More energy consumption, in particular peak power consumption lead to a higher load of the grid and therefore to less stability in the grid. This is to be "punished" with higher costs (expenses).

The reefer temperature dynamic in equation (3) is an approximation calculated from Newton's Law of Cooling (https://en.wikipedia.org/wiki/Newton%27s_law_of_cooling). More complex / accurate temperature dynamic models could be integrated.

The reefer-specific thermal parameters $\alpha_r$ and $\beta_r$ used within the system dynamic equation (3), calculated from Newton's Law of Cooling, are not given, when the reefers enter the storage place. They depend on multiple factors:

- Container properties (size, surface area, thermal insulation, etc.)
- Cargo (mass, specific heat coefficient, etc.)
- External factors (direct solar exposure, surrounding, etc.)

These factors are typically not explicitly accessible for arbitrary reefers entering the terminal/storage place. They can be provided if there are measurements by a monitoring system during the transport of the reefer containers before their arrival on the storage place. Alternatively, they can be estimated by heuristics methods.

According to an embodiment of the invention the following pre-qualification routine is defined for reefers to participate in the joint operational control optimization: Routine steps are marked by numbers in figure 5.

1 Connect reefer to reefer management system
2 Run reefer with local control strategy (typically ON/OFF-cycling) for a certain time / cycles, e.g., a few hours, e.g. 1-2 cycles (see figure 2 as example)

3 Record measurement data over this time span (see Figure 3 as example)

    a. Ambient temperature
    b. Internal reefer temperature
    c. Optionally Setpoint for reefer internal temperature (set point can be configured by default value or derived from the
    d. Optionally power input (and idle power) and control mode (on/off)

4 Use suitable regression techniques (e.g., linear, least squares or polynomial) or maybe a machine learned data clustering method to find the thermal parameters $\alpha_r$ and $\beta_r$ that give the best fit of the equation (3) of the MILP-model to the measurement data from step 3 (see figure 4 as example). Other models than the above shown MILP-Model are possible. E.g a machine learning model (recurrent neural network) can be trained with said thermal parameters and be used for the optimization process.

5 Continue with data recording as in step 3 and repeat step 4 regularly to update the parameters based on new measurement data

6 Subsequently and/or concurrent the energy and peak power consumption can be obtained or determined by the said measurement (over time) and is optimized by using the data building temperature dynamics starting from a beginning time interval over a pre-definable amount of subsequent time intervals with the objective to keep the internal temperature of each reefer container in the corresponding pre-determined temperature range (see above shown table)

7 Finally, the reefer container system receives instructions to operate all of the reefer containers within the corresponding pre-determined temperature ranges whereby each container operates with the parameters of optimized the power and peak power consumption.

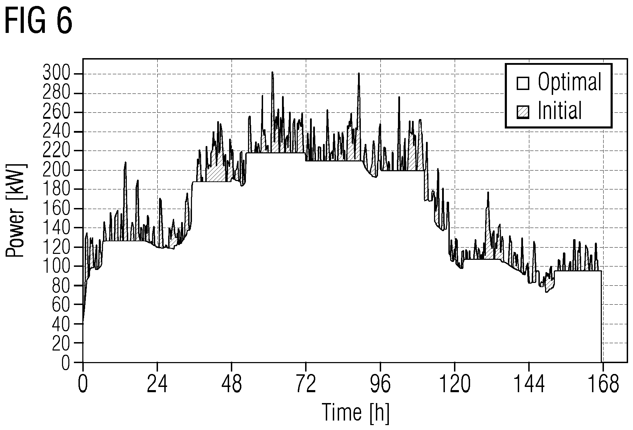

Figure 6 depicts energy savings and peak power reduction in an example scenario reached by the optimization. On the x-axis there is a timeline in hours. On the y-axis there is the power in [kW]. Above first line/curve in dashes represents the intial data and the black second line/curve below the first line/curve represents the optimal data.

The invention has been described in detail with reference to embodiments thereof and examples. Variations and modifications are possible. Instead of the above-described production process one or more processes can analogously be applied to other technical systems.

The system can be (computer-)implemented for performing the inventive method steps.

This system can be integrated into a (computer) cloud system. It includes one or more processors and can be coupled with data, where said processor(s) is/are configured to execute the method steps.

The method can be executed by at least one processor such as a microcontroller or a microprocessor, by an Application Specific Integrated Circuit (ASIC), by any kind of computer, including mobile computing devices such as tablet computers, smartphones or laptops, or by one or more servers in a control room or cloud.

For example, a processor, controller, or integrated circuit of the system and/or computer and/or another processor may be configured to implement the acts described herein.

The above-described method may be implemented via a computer program (product) including one or more computer-readable storage media having stored thereon instructions executable by one or more processors of a computing system and/or computing engine. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. A processor performs or executes the instructions to train and/or apply a trained model for controlling a system. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

In addition, and alternatively, it is possible that a control device receives other computer-readable control signals in order to initiate the mentioned steering/control process by its processor(s).

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

The terminology used herein is for the purpose of describing particular embodiments only and is not intended to be limiting of example embodiments of the invention. As used herein, the singular forms "a", "an", and "the" are intended to include the plural form as well, unless the context clearly indicates otherwise.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims may, alternatively, be made to depend in the alternative from any preceding or following claim, whether independent or dependent, and that such new combinations are to be understood as forming a part of the present specification.

None of the elements recited in the claims are intended to be a means-plus-function element unless an element is expressly recited using the phrase "means for" or, in the case of a method claim, using the phrases "operation for" or "step for".

While the present invention has been described above by reference to various embodiments, it should be understood that many changes and modifications may be made to the described embodiments. It is therefore intended that the foregoing description be regarded as illustrative rather than limiting, and that it be understood that all equivalents and/or combinations of embodiments are intended to be included in this description.

**Claims**

1. A computer-implemented method for optimizing energy and peak power consumption of a reefer container system comprising a plurality of reefer containers (R1,..., Rx) and comprising a directly coupled or remote server computer (DEOP) in communication with each reefer container, whereby each reefer container comprises a refrigeration system which is coupled with at least one sensor suitable for measuring the internal temperature of an interior product compartment of the reefer container and configured to control the internal temperature within a pre-determined temperature range dependent on at least one product loaded in the interior product compartment, the method comprising the following steps:

   - a) recording, by measuring at the at least one sensor, the internal temperature over a pre-defined time horizon, which is divided into several time intervals, whereby some of the time intervals frame one or more peak power intervals,
   - b) receiving ambient temperature measured outside the reefer containers in each time interval over the time horizon,
   - c) obtaining energy consumption of each reefer container in each such time interval,
   - d) obtaining or determining power peak consumption of all reefer containers in each peak power interval,
   - e) providing a model which represents reefer temperature dynamics by using the recorded internal temperatures measured in each such time interval and the ambient temperatures in each such time interval,
   - f) optimizing the energy and peak power consumption by using the provided temperature dynamics starting from a beginning time interval over a pre-definable amount of subsequent time intervals with the objective to keep the internal temperature of each reefer container in the corresponding pre-determined temperature range,
   - g) operating all of the reefer containers within the corresponding pre-determined temperature ranges whereby each container operates with the parameters of the optimized the power and peak power consumption.

2. Method according to the preceding claim, wherein at least one setpoint for the reefer internal temperature is configured, whereby such setpoint can be set by default value or be derived from the provided model and is input into said optimizing according to step f) and used during operating according to step g).

3. Method according to any of the preceding claims, wherein thermal parameters labelled with heat exchange coefficient of each reefer container and cooling efficiency of each reefer container are used in the model of the temperature dynamics.

4. Method according to the preceding claim, wherein the thermal parameters are approximated by regression techniques or machine learned data clustering techniques.

5. Method according to any of the preceding claims, wherein the model is enhanced or is trained by said parameters and/or setpoints during operation of the reefer containers.

6. Method according to any of the preceding claims, wherein the temperature dynamics are derived from Newtons's Law of cooling.

7.  Method according to any of the preceding claims, wherein the temperature dynamics is modelled as such that energy and peak power consumption are weighted.

8.  Method according to any of the preceding claims, wherein the method steps acccording to claim 1 can be repeated preferably triggered by at least one pre-defined event.

9.  Method according to any of the preceding claims, wherein the optimizing step of claim 1 uses mixed integer linear programming with the objective function to minimize the energy and peak power consumption while keeping the internal temperature of each reefer container in the corresponding pre-determined temperature range.

10. Method according to any of the preceding claims, wherein properties like size, surface area, termal insulation of each reefer container and mass of the product as well as external factors like solar exposure, surroundings to reflect or absorb heat influences the temperature dynamics in the model.

11. System for optimizing energy consumption and peak power of a reefer container system comprising a plurality of reefer containers (R1,..., Rx), whereby the system is directly and/ or remotely coupled with a server computer (DEOP) being in communication with each reefer container, whereby each reefer container comprises a refrigeration system which is coupled with at least one sensor suitable for measuring the internal temperature of an interior product compartment of the reefer container and configured to control the internal temperature within a pre-determined temperature range dependent on at least one product loaded in the interior product compartment, comprising at least one processor or processing logic which is configured to:

    - a) recording, by measuring at the at least one sensor, the internal temperature over a pre-defined time horizon, which is divided into several time intervals, whereby some of the time intervals frame one or more peak power intervals,
    - b) receiving ambient temperature measured outside the reefer containers in each time interval over the time horizon,
    - c) obtaining energy consumption of each reefer container in each such time interval,
    - d) obtaining or determining power peak consumption of all reefer containers in each peak power interval,
    - e) providing a model which represents reefer temperature dynamics by using the recorded internal temperatures measured in each such time interval and the ambient temperatures in each such time interval,
    - f) optimizing the energy and peak power consumption by using the provided temperature dynamics starting from a beginning time interval over a pre-definable amount of subsequent time intervals with the objective to keep the internal temperature of each reefer container in the corresponding pre-determined temperature range,
    - g) operating all of the reefer containers within the corresponding pre-determined temperature ranges whereby each container operates with the parameters the of optimized the power and peak power consumption.

12. Computer program product which is being executed by one or more processors of a computer or of the system according to any of the preceding system claims in order to execute a method according to any of the preceding method claims.

## FIG 1

FIG 2

EP 4 390 788 A1

FIG 3

| | Time | Container ID | Power | Mode | Ambient Temp. | Return Temp. | Ref. Temp |
|---|---|---|---|---|---|---|---|
| | 09.01.2021 00:00 | ZMOU8913980 | 2050.405172 | Idle | 16.49378378 | 18.8 | 19 |
| | 09.01.2021 00:15 | ZMOU8913980 | 1760.443986 | Idle | 16.45256065 | 18.7 | 19 |
| | 09.01.2021 00:30 | ZMOU8913980 | 2557.002949 | Idle | 16.21486487 | 18.7 | 19 |
| | 09.01.2021 00:45 | ZMOU8913980 | 2195.575347 | Idle | 16.34588859 | 18.8 | 19 |
| | 09.01.2021 01:00 | ZMOU8913980 | 996.8362877 | Cooling | 16.31167109 | 18.6 | 19 |
| | 09.01.2021 01:30 | ZMOU8913980 | 2037.965512 | Cooling | 16.09869452 | 18.7 | 19 |
| | 09.01.2021 01:45 | ZMOU8913980 | 2503.014046 | Cooling | 16.19407008 | 18.7 | 19 |
| | 09.01.2021 02:00 | ZMOU8913980 | 2061.048744 | Cooling | 16.17267905 | 18.7 | 19 |
| | 09.01.2021 02:15 | ZMOU8913980 | 2031.315873 | Idle | 16.05491803 | 19 | 19 |
| | 09.01.2021 02:30 | ZMOU8913980 | 1804.030469 | Cooling | 16.06914601 | 19.1 | 19 |
| | 09.01.2021 02:45 | ZMOU8913980 | 2448.243365 | Cooling | 16.1184573 | 19 | 19 |
| | 09.01.2021 03:00 | ZMOU8913980 | 1669.918479 | Idle | 15.89574468 | 18.9 | 19 |
| | 09.01.2021 03:15 | ZMOU8913980 | 2192.722669 | Idle | 15.64330709 | 18.9 | 19 |
| | 09.01.2021 03:30 | ZMOU8913980 | 2217.715128 | Cooling | 15.42909091 | 18.6 | 19 |
| | 09.01.2021 03:45 | ZMOU8913980 | 2727.365525 | Cooling | 15.35740741 | 18.7 | 19 |
| | 09.01.2021 04:00 | ZMOU8913980 | 2042.381761 | Idle | 15.24125326 | 19.1 | 19 |
| | 09.01.2021 04:15 | ZMOU8913980 | 2110.578752 | Idle | 15.28726287 | 19 | 19 |
| | 09.01.2021 04:30 | ZMOU8913980 | 1895.477485 | Idle | 15.09457995 | 19 | 19 |
| | 09.01.2021 04:45 | ZMOU8913980 | 1550.900515 | Idle | 15.3008 | 18.9 | 19 |
| | 09.01.2021 05:00 | ZMOU8913980 | 2126.150329 | Idle | 15.22794521 | 18.9 | 19 |
| | 09.01.2021 05:15 | ZMOU8913980 | 2271.060247 | Idle | 15.31968504 | 18.9 | 19 |
| | 09.01.2021 05:30 | ZMOU8913980 | 1073.393998 | Idle | 15.27158177 | 18.7 | 19 |
| | 09.01.2021 06:00 | ZMOU8913980 | 2275.720942 | Idle | 15.39057592 | 18.8 | 19 |
| | 09.01.2021 06:15 | ZMOU8913980 | 2438.174679 | Idle | 15.62403101 | 18.8 | 19 |
| | 09.01.2021 06:30 | ZMOU8913980 | 1955.315092 | Cooling | 15.83896104 | 18.6 | 19 |
| | 09.01.2021 07:00 | ZMOU8913980 | 2549.501912 | Cooling | 16.49069149 | 19 | 19 |
| | 09.01.2021 07:15 | ZMOU8913980 | 1883.923989 | Idle | 17.09809783 | 19 | 19 |

EP 4 390 788 A1

# FIG 4

$$\Delta T = (Tamb - T - 5.442*P) * [1 - exp(-0.058*\Delta t)]$$

# FIG 5

FIG 6

Europäisches
Patentamt

European
Patent Office

Office européen
des brevets

# EUROPEAN SEARCH REPORT

**Application Number**

EP 22 38 3261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SØRENSEN KRESTEN K ET AL: "Adaptive MPC for a reefer container", CONTROL ENGINEERING PRACTICE, PERGAMON PRESS, OXFORD, GB, vol. 44, 3 August 2015 (2015-08-03), pages 55-64, XP029307696, ISSN: 0967-0661, DOI: 10.1016/J.CONENGPRAC.2015.05.012 * the whole document * | 1-12 | INV. G06Q10/04 G06Q10/0832 G06Q50/06 G06Q50/28 |
| A | CN 105 353 611 B (SHENYANG INST OF AUTOMATION GUANGZHOU CAS; SHENYANG INST AUTOMATION) 27 March 2018 (2018-03-27) * the whole document * | 1-12 | |
| A | SHI ZICHUAN ET AL: "An Optimal Operation Strategy for Integrated Energy-Logistics System in Green Port", 2022 IEEE/IAS INDUSTRIAL AND COMMERCIAL POWER SYSTEM ASIA (I&CPS ASIA), IEEE, 8 July 2022 (2022-07-08), pages 1592-1597, XP034230383, DOI: 10.1109/ICPSASIA55496.2022.9949685 [retrieved on 2022-11-18] * the whole document * | 1-12 | **TECHNICAL FIELDS SEARCHED (IPC)** G06Q |
| A | US 2019/277558 A1 (ADETOLA VERONICA [US] ET AL) 12 September 2019 (2019-09-12) * paragraphs [0001], [0011], [0019] * | 1-12 | |

The present search report has been drawn up for all claims

| Place of search | Date of completion of the search | Examiner |
|---|---|---|
| Munich | 2 May 2023 | Breidenich, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  .................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 3261

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2023

| Patent document cited in search report | | Publication date | Patent family member(s) | | Publication date |
|---|---|---|---|---|---|
| CN 105353611 | B | 27-03-2018 | NONE | | |
| US 2019277558 | A1 | 12-09-2019 | CN | 109844429 A | 04-06-2019 |
| | | | EP | 3526528 A1 | 21-08-2019 |
| | | | SG | 11201902971Q A | 30-05-2019 |
| | | | US | 2019277558 A1 | 12-09-2019 |
| | | | WO | 2018071652 A1 | 19-04-2018 |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11079173 B2